# EUROPÄISCHE PATENTSCHRIFT

(11) **EP 2 129 904 B1**
(45) Veröffentlichungstag und Bekanntmachung des Hinweises auf die Patenterteilung: **19.10.2011**
(21) Anmeldenummer: 08701531.9
(22) Anmeldetag: 16.01.2008
(51) Int. Cl.: F02M 61/18

(54) **Schaltventil mit beschichteten Dichtsitz**
Control Valve having coated sealing seat
Soupape de commande ayant un siège d'étanchéité avec revêtement

(30) Priorität: 26.02.2007 DE 102007009168
(43) Veröffentlichungstag der Anmeldung: 09.12.2009
(73) Patentinhaber: Robert Bosch GmbH, 70442 Stuttgart (DE)
(72) Erfinder: SCHWAB, Ilona, 70567 Moehringen (DE); RAPP, Holger, 71254 Ditzingen (DE); STOECKLEIN, Wolfgang, 71322 Waiblingen (DE); RETTICH, Andreas, 71083 Herrenberg-Kuppingen (DE); RUECKLE, Markus, 70567 Stuttgart (DE); RADSAK, Christoph, 70199 Stuttgart (DE)
(86) Internationale Anmeldenummer: PCT/EP2008/050466
(87) Internationale Veröffentlichungsnummer: WO 2008/104422

(56) Entgegenhaltungen:
- WO-A-2005/059353
- WO-A-2006/072522
- DE-A1- 4 238 727

## Beschreibung

### Stand der Technik

Bei druckausgeglichenen Schaltventilen wird das unter Druck stehende Medium im geschlossenen Zustand üblicherweise in einer ringförmigen Druckkammer eingeschlossen. Diese Kammer ist auf der einen Seite durch eine Führung und auf der anderen Seite durch einen Dichtsitz begrenzt, wobei Führung und Dichtsitz exakt denselben Durchmesser d auf weisen. Dadurch entsteht keine in Öffnungs- oder in Schließrichtung wirkende Kraft auf das Ventilelement, welches in der Regel nadelförmig ausgebildet ist.

Mit fortschreitendem Betrieb des Schaltventiles kommt es zu einem Angleich zwischen der Dichtfläche des Ventilstückes und des in der Regel nadelförmig ausgebildeten Ventilelementes. Da der Angleich, vom ursprünglichen Durchmesser d ausgehend, nur zu einer Seite hin erfolgt, ist eine Veränderung des wirksamen Sitzdurchmessers und damit die Erzeugung einer in Öffnungsrichtung wirkenden Kraft auf das Ventilelement die Folge. Der Druckausgleich des Schaltventils ist gestört und sein dynamisches Verhalten ändert sich bis hin zur statischen Undichtheit.

Aus DE 100 31 265 A1 ist ein Kraftstoffeinspritzventil bekannt, welches einen Ventilkörper aufweist, in dem eine Bohrung ausgebildet ist. Die Bohrung wird an ihrem brennraumseitigen Ende von einem Ventilsitz begrenzt, von dem mindestens eine Einspritzöffnung abgeht, die in Einbaulage des Kraftstoffeinspritzventils in den Brennraum der Brennkraftmaschine mündet. In der Bohrung ist eine kolbenförmige Ventilnadel längsverschiebbar angeordnet, die an ihrem brennraumseitigen, d. h. dem dem Ventilsitz zugewandten Ende eine Ventildichtfläche aufweist, mit der die Ventilnadel mit dem Ventilsitz zusammenwirkt. Hierbei wird in Schließrichtung der Ventilnadel, dies bedeutet, wenn die Ventilnadel mit ihrer Ventildichtfläche auf dem Ventilsitz aufliegt, die mindestens eine Einspritzöffnung verschlossen. Bei vom Ventilsitz abgehobener Ventilnadel fließt Kraftstoff zwischen der Ventildichtfläche und dem Ventilsitz hindurch den Einspritzöffnungen zu und wird von dort in den Brennraum der Brennkraftmaschine eingespritzt.

Die Steuerung der Längsbewegung der Ventilnadel in der Bohrung erfolgt durch das Verhältnis zweier Kräfte, zum einen durch eine hydraulische Kraft, die durch den Druck im Druckraum, der zwischen der Wand der Bohrung mit der Ventilnadel ausgebildet und mit Kraftstoff befüllt ist, entsteht, so dass eine hydraulische Kraft auf die Ventilnadel ausgeübt wird; zum anderen wirkt eine Schließkraft auf die Ventilnadel, die auf das brennraumabgewandte Ende der Ventilnadel mittels einer geeigneten Vorrichtung ausgeübt wird.

Eine solche Anordnung gemäß dem Oberbegriff des Anspruchs 1 ist aus der WO 2005/059353 bekannt.

### Offenbarung der Erfindung

Es wird vorgeschlagen, eine Sitzfläche an einem Ventilsitz mit einem Ventilelement und einem Ventilstück auf einen Durchmesser d + x, der nur geringfügig größer ist als d, zu begrenzen. Dadurch wird das Anwachsen des wirksamen Sitzdurchmessers auf den Wert d + x begrenzt. Die maximale Sitzbreite x des Ventilsitzes wird so gewählt, dass die hydraulische Kraft, welche das unter dem Druck p stehende Medium in der Druckkammer auf das nadelförmige Ventilelement ausübt, nicht zum Öffnen des Ventilelementes gegen eine durch eine Feder auf das Ventilelement ausgeübte Schließkraft Fₛ führt.

In einer Ausführung der der Erfindung zugrunde liegenden Lösung erfolgt eine Sitzbegrenzung des Ventilsitzes des Schaltventiles durch eine Nut. Die Nut weist einen Innendurchmesser d + x auf und ist zum Beispiel in das Ventilstück eingebracht, an welchem das zum Beispiel hülsenförmig ausgebildete Ventilelement außenliegend angeordnet ist. Außerhalb der Sitzbegrenzungsnut liegt die Ventiloberfläche an jedem Ort tiefer als eine gedachte, virtuelle Fortsetzung der Sitzlinie des Ventilsitzes innerhalb der Nut. Mit der Sitzbegrenzungsnut lässt sich eine einfachere und präzisere Fertigung einer Sitzabsetzkante erreichen.

Der Vorteil der Erfindung, eine Begrenzung des Sitzdurchmessers eines Schaltventils über dessen Lebensdauer zu erreichen, liegt darin, die Sitzfläche des Schaltventils innerhalb eines Durchmessers d + x mit einer höheren Verschleißfestigkeit auszuführen als außerhalb dieser Sitzfläche. Das Erreichen einer höheren Verschleißfestigkeit kann einerseits durch Aufbringen einer verschleißfest ausgebildeten Schicht auf das Ventilstück innerhalb des Durchmessers d + x erreicht werden. Als Verschleißschicht eignet sich zum Beispiel eine pyrolytisch aufgebrachte SiO₂-Schicht, welche eine Dicke von deutlich weniger als 1 µm aufweist und dem derart beschichteten Körper eine hohe Verschleißfestigkeit verleiht, oder es kann eine hauptsächlich aus Kohlenstoff hergestellte Verschleißschutzschicht (DLC) eingesetzt werden. Auch andere Beschichtungen, wie z. B. Hartchrom oder der Keramik zuzuordnede Schicht (CrN, TiC, TiN) sind möglich.

Um die Sitzbereiche, die in unterschiedlicher Verschleißfestigkeit ausgebildet sind, eindeutig voneinander zu trennen, ist es erfindungsgemäß, zwischen diesen beiden, jeweils unterschiedliche Verschleißfestigkeit aufweisenden Sitzbereichen eine Trennnut mit einem Innendurchmesser von d + x vorzusehen. Bei dieser Konfiguration können die Sitzlinien innerhalb und außerhalb der Trennnut auf einer Geraden liegen.

In der Figurenbeschreibung wird eine Ausführungsvariante des erfindungsgemäß ausgestalteten Schaltventiles beispielhaft anhand eines Schaltventils beschrieben, welches eine Abströmung nach außen aufweist und dessen Ventilsitz untenliegend angeordnet ist. Neben der in der Zeichnung dargestellten Ausführungsvariante des erfindungsgemäß vorgeschlagenen Schaltventiles können die erfindungsgemäß vorgeschlagenen Maßnahmen auch auf jedes andere druckausgeglichene Schaltventil, das Ventilstück betreffend, verwirklicht werden. Weitere Ausführungsvarianten eines druckausgeglichenen Schaltventiles sind eine Abströmung nach innen aufweisende Ventile, "I-Ventile" mit gerader Sitzfläche am Außenteil und Sitzkante am Innenteil, und "A-Ventile", die eine Abströmung nach außen aufweisen, eine gerade Sitzfläche am Innenteil umfassen und deren Sitzkante am Außenteil angeordnet ist. Die Dichtkante kann in Bezug auf die mit einem Systemdruck beaufschlagte Druckkammer oben oder unten liegend angeordnet sein, dies bezieht sich sowohl auf "I-Ventile" als auch auf "A-Ventile". Das Betätigungsorgan, mit dem druckausgeglichene "I-Ventile" beziehungsweise druckausgeglichene "A-Ventile" betätigt werden, kann zum Beispiel ein Magnetventil umfassen, welches entweder über oder unter dem Anker angeordnet sein, wobei eine Öffnungsbewegung des Ventilsitzes sowohl in vertikaler Richtung nach oben als auch nach unten erfolgen kann. Es ist sowohl möglich, das jeweils innenliegende Teil des Ventils fest, d. h. stationär anzuordnen und das außenliegende Teil als das zu bewegende Teil zu gestalten als auch das außenliegende Teil fest anzuordnen und das innenliegende Teil demgegenüber beweglich auszubilden.

### Kurze Beschreibung der Zeichnungen

Anhand der Zeichnung wird die Erfindung nachstehend eingehender beschrieben.

Es zeigt:
- Figur 1: eine Ausführungsform eines druckausgeglichenen Ventiles gemäß des Standes der Technik mit nach außen gerichteter Abströmung, mit im unteren Bereich angeordneten Ventilsitz,
- Figur 2: die schematische Darstellung eines ausgeglichenen Schaltventils in einer beispielhaften Ausführungsform mit einer Sitzab- setzkante beim Durchmesser d + x,
- Figur 3: eine weitere beispielhafte Ausführungsform es druckaus- geglichenen Schaltventils mit einer Sitzbegrenzungsnut und
- Figur 4: eine Ausführungsform des erfindungsgemäß vorgeschlagenen druckaus- geglichenen Schaltventils mit einer Trennnut und einem Bereich mit einer ver- schleißfesten Schicht innerhalb dieser Trennnut.

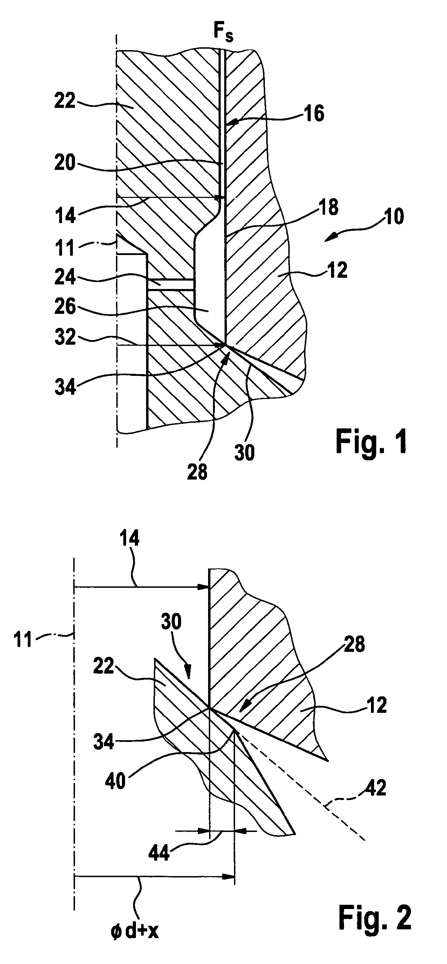

Der Darstellung gemäß Figur 1 ist ein druckausgeglichen ausgebildetes Schaltventil gemäß des Standes der Technik zu entnehmen.

Ein in Figur 1 dargestelltes Schaltventil 10 umfasst neben einem Ventilelement 12 ein Ventilstück 22. Das Schaltventil 10 ist symmetrisch zu seiner Symmetrielinie 11 aufgebaut. Das Ventilelement 12 ist mit seiner Innenmantelfläche 18 an einer Führung 16 des Ventilstücks 22 aufgenommen. Zwischen der Innenmantelfläche 18 des Ventilelementes 12 und der Außenumfangsfläche des Ventilstücks 22 befindet sich ein Spalt 20, der die eng tolerierte Führung 16 des Ventilelementes 12 darstellt.

Gemäß der Darstellung in Figur 1 ist das Ventilelement 12 in einen Ventilsitz 28 gestellt. Dadurch wird das Abströmen von unter einem Systemdruck stehenden Kraftstoff aus einem Hochdruckraum 26 verhindert. Der Hochdruckraum 26, gebildet durch eine ringförmig verlaufende taschenförmige Ausnehmung zwischen der Innenmantelfläche 18 des Ventilelementes 12 und dem Ventilstück 22, wird über eine Querbohrung 24 mit unter Systemdruck stehendem Kraftstoff befüllt. Bei geschlossenem Ventilsitz 28 steht der unter Systemdruck stehende Kraftstoff im Hochdruckraum 26 an.

Im Bereich des Ventilsitzes 28 weist das Ventilelement 12 einen Sitzdurchmesser 32 auf. Das Ventilelement 12 sitzt in der Darstellung gemäß Figur 1 auf einer Sitzfläche 30 des Ventilstücks 22 auf. Dabei bildet sich eine Kontaktlinie 34, die bei der Relativbewegung des zum Beispiel hülsenförmig ausgebildeten Ventilelementes 12 relativ zum Ventilstück 22 im Kraftstoffinjektor des Schaltventiles 10 hohen mechanischen Beanspruchungen ausgesetzt ist.

### Ausführungsformen

Der Darstellung gemäß Figur 2 ist eine beispielhafte Ausführungsform des druckausgeglichenen Schaltventiles mit einer Sitzabsetzkante zu entnehmen.

In der Darstellung gemäß Figur 2 ist der Kontaktbereich zwischen dem Ventilelement 12 und dem Ventilstück 22 in einem vergrößerten Maßstab dargestellt. Aus der Darstellung gemäß Figur 2 geht hervor, dass das Ventilelement 12 einen Innendurchmesser 14, auch bezeichnet mit d, aufweist. Aus der Darstellung gemäß Figur 2 geht hervor, dass das Ventilelement 12 mit dem Ventilstück 22 entlang der Kontaktlinie 34 in Kontakt steht. Erfindungsgemäß ist am Ventilstück 22 eine Sitzbegrenzungsfläche 44 (Maß x) ausgebildet, um welche die Sitzfläche 30 des Ventilstücks 22 im Bereich des Ventilsitzes 28 in radiale Richtung ausgedehnt ist und die durch eine Sitzabsetzkante 40 begrenzt ist.

Wie aus der Darstellung gemäß Figur 2 hervorgeht, entsteht dadurch unterhalb des Ventilelementes 12 eine Sitzbegrenzungsfläche 44, so dass die Kontaktlinie 34 beim Betrieb des Ventilelementes 12 bis zur Sitzabsetzkante 40, vergleiche Maß d + x, wandern kann. Die Sitzbegrenzungsfläche 44 liegt auf einer in Figur 2 gestrichelt dargestellten, gedachten Fortsetzung 42 der Sitzfläche 30 des Ventilstücks 22. Bei der in Figur 2 dargestellten Ausführungsform der erfindungsgemäß vorgeschlagenen Lösung ist die Winkeldifferenz zwischen dem Ventilstück 22 und dem Ventilelement 12 ab der Sitzabsetzkante 40, d. h. im Bereich der Sitzbegrenzung (d + x), vergrößert. Durch die in Figur 2 dargestellte Ausführungsform des Ventilsitzes 28 wird das Anwachsen des wirksamen Sitzdurchmessers im Bereich des Ventilsitzes 28 auf den Wert, der durch d + x gegeben ist, begrenzt. Die maximale Sitzbegrenzung 44, d. h. das Maß x, wird bevorzugt so gewählt, dass die hydraulische Kraft, welche das unter dem Druck p stehende Medium im Hochdruckraum 26 erzeugt, sicher kein Öffnen des Ventilelementes gegen die üblicherweise durch eine Feder auf das Ventilelement 12 ausgeübte Schließkraft Fₛ bewirkt.

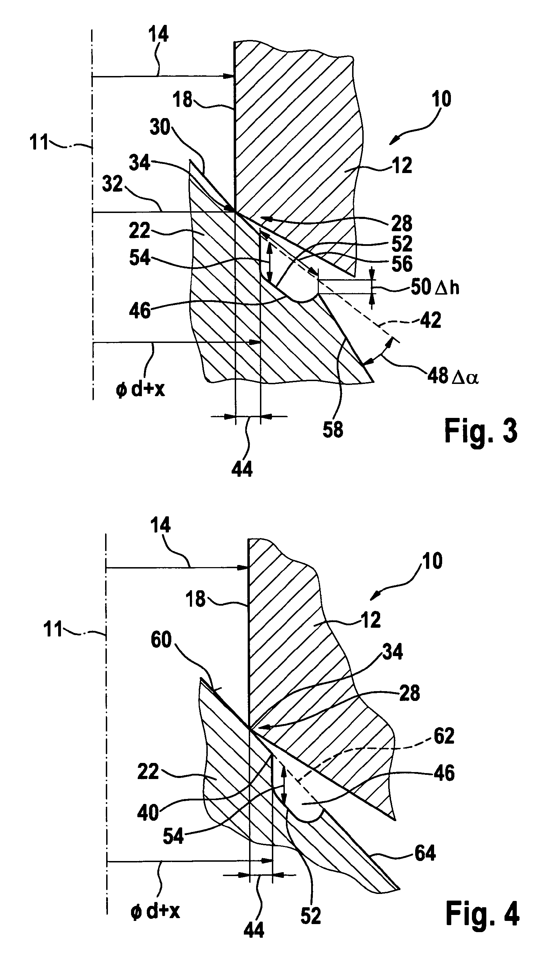

Figur 3 zeigt eine weitere beispielhafte Ausführungsform des druckausgeglichen ausgebildeten Schaltventiles.

In Figur 3 ist das Ventilelement 12 des Schaltelementes 10 dargestellt, welches eine Mantelfläche 18 aufweist und in einem Innendurchmesser 14 ausgelegt ist. In der Darstellung gemäß Figur 3 ist der durch das Ventilelement 12 bei Relativbewegung zum Ventilstück 22 freigebbare Ventilsitz 28 geschlossen, d. h. das Ventilelement 12 liegt entlang einer Kontaktlinie 34 an der Sitzfläche 30 des Ventilstücks 22 an, so dass der in Figur 1 dargestellte, oberhalb der Sitzfläche 30 des Ventilstücks 22 liegende Hochdruckraum 26, der mit unter Systemdruck stehenden Kraftstoff befüllt ist, abströmseitig verschlossen bleibt. In dem in Figur 1 dargestellten Hochdruckraum 26 und in der diesen beaufschlagenden Querbohrung 24 steht mithin Kraftstoff an, der über eine Hochdruckquelle mit einem definierten Systemdruck beaufschlagt ist.

Figur 3 ist weiterhin zu entnehmen, dass das Ventilelement 12 im Bereich des Ventilsitzes 28 den Sitzdurchmesser 32 aufweist, der in der Ausführungsform gemäß Figur 3 mit dem Innendurchmesser 14, den das Ventilelement 12 im Bereich seiner Führung 16 annimmt, zusammenfällt.

In der in Figur 3 dargestellten Ausführungsform des druckausgeglichenen Ventils wird das Anwachsen des Sitzdurchmessers 32 in Bezug auf die Sitzfläche 30 des Ventilstücks 22 durch eine Sitzflächenbegrenzungsnut 46 begrenzt. Wie der Darstellung gemäß Figur 3 entnehmbar ist, verläuft unterhalb des Sitzdurchmessers 32 am Ventilelement 12 die Sitzbegrenzungsfläche 44, die in einem Maß ausgebildet ist, um welche, die Sitzflächenbegrenzungsnut 46 vom Sitzdurchmesser 32 des Ventilelementes 12 in der Ausführungsform gemäß Figur 3 radial versetzt ist. Die Sitzflächenbegrenzungsnut 46 ist um einen Höhenversatz 50 in Bezug auf die gedachte Fortsetzung 42 der Sitzlinic entsprechend des Verlaufes der Sitzfläche 30 im Ventilstück 22 zurückspringend angeordnet. Eine Breite der Sitzflächenbegrenzungsnut 46 ist durch Bezugszeichen 56 angedeutet. Aus der Darstellung gemäß Figur 3 geht hervor, dass ein weiterer Verlauf einer Kegelfläche 58 am Ventilstück 22 um eine Winkelabweichung 48 steiler verläuft in Bezug auf die gedachte Fortsetzung 42 der Sitzlinie. Durch die in Figur 3 dargestellte Ausführungsform ist das Wandern des Sitzdurchmessers 32 des Schaltventiles 10 auf die in Figur 3 mit Bezugszeichen 44 bezeichnete Sitzbegrenzungsfläche 44 begrenzt.

Gemäß dieser Ausführungsvariante, d. h. durch die Ausbildung der Sitzflächenbegrenzungsnut 46, deren Boden durch Bezugszeichen 52 angedeutet ist, lässt sich die Sitzabsetzkante 40 leichter herstellen, da durch die Sitzflächenbegrenzungsnut 46 genügend Raum zur Verfügung steht und eine definierte Materialunterbrechung gegeben ist.

Eine vorteilhafte Ausführungsform des der Erfindung zugrunde liegenden Gedankens ist in Figur 4 dargestellt.

Gemäß dieser Ausführungsform wird erfindungsgemäß vorgeschlagen, den Sitzdurchmesser über die Lebensdauer des Schaltventiles 10 dadurch zu begrenzen, dass innerhalb des Ventilsitzes 28 die Sitzbegrenzungsfläche 44, gegeben durch das Maß d + x, mit einer höheren Verschleißfestigkeit auszuführen ist, als außerhalb dieses besagten Durchmessers. Dies kann einerseits durch Aufbringen einer Verschleißschutzschicht 60 auf die Sitzfläche 30 innerhalb der Sitzbegrenzungsfläche 44 erreicht werden. Die Verschleißschutzschicht 60 kann, um ein Beispiel zu nennen, eine pyrolytisch aufgebrachte SiO₂-Schicht sein, deren Dicke deutlich weniger als 1 µm beträgt und dem beschichteten Körper eine hohe Verschleißfestigkeit verleiht. Sie kann auch aus Kohlenstoff, Hartchrom oder der Keramik zuzuordnende Schichten wie z. B. CrN, TiC, TiN gefertigt sein. In der Ausführungsform gemäß Figur 4 ist die Verschleißschutzschicht 60 auf die Sitzfläche 30 des Ventilstücks 22 aufgebracht. Sie könnte ebenso gut auf eine als Kegel ausgebildete Spitze des Ventilelementes 12 aufgebracht sein. Aus der Darstellung gemäß Figur 4 geht hervor, dass die Verschleißschutzschicht 60 der Sitzfläche 30 am Ventilstück 22 durch die Sitzabsetzkante 40 begrenzt ist. Die Sitzabsetzkante 40 begrenzt gleichzeitig den Bereich der Sitzfläche 30, der im Durchmesser d + x ausgebildet ist. Aus der in Figur 4 dargestellten Ausführungsform geht weiterhin hervor, dass die Sitzflächenbegrenzungsnut 46 in der Tiefe 54 ausgebildet ist, in Bezug auf das Ventilstück 22 durch den Nutgrund 52 begrenzt ist und eine gedachte Fortsetzung eines unbeschichteten Bereiches 64 des Ventilstücks 22 darstellt. Figur 4 zeigt, dass die Sitzbegrenzungsfläche 44, d. h. der Durchmesserbereich, der durch das Maß d + x gegeben ist, von der Verschleißschutzschicht 60, zum Beispiel einer pyrolytisch aufgebrachten SiO₂-Schicht, bedeckt ist. Der in der Ausführungsform gemäß Figur 4 dargestellte unbeschichtete Bereich 64 des Ventilstücks 22 und der mit einer Verschleißschutzschicht 60 bedeckte Bereich der Sitzfläche 30 sind durch die Sitzflächenbegrenzungsnut 46 eindeutig voneinander getrennt. Aus der Darstellung gemäß Figur 4 geht hervor, dass das Ventilelement 12 mit seinem Sitzdurchmesser 32 auf der Verschleißschutzschicht 60 aufsetzt, die am Ventilstück 22 ausgebildet ist. Auch in der in Figur 4 dargestellten Ausführungsform des erfindungsgemäß vorgeschlagenen Schaltventiles ist die Herstellung der Sitzabsetzkante 40 durch das Vorhandensein der Sitzflächenbegrenzungsnut 46 in fertigungstechnischer Hinsicht wesentlich vereinfacht.

Es besteht die Möglichkeit, die in Figur 3 dargestellte Winkelabweichung 48 der Kegelfläche 58 des Ventilstücks 22 auch in Bezug auf den unbeschichteten Bereich 64 am Ventilstück 22 gemäß der Ausführungsform in Figur 4 zu übertragen. In der in Figur 4 dargestellten Ausführungsform des erfindungsgemäß vorgeschlagenen Schaltventiles 10 können die Sitzlinien, die innerhalb und außerhalb der Sitzflächenbegrenzungsnut 46 verlaufen, auch auf einer Geraden angeordnet sein, ohne die Wirksamkeit der erfindungsgemäß vorgeschlagenen Lösung in Bezug auf die Begrenzung des Sitzdurchmessers 32 über die Lebensdauer des Schaltventiles 10 zu begrenzen. In kinematischer Umkehr der in den Figuren 2, 3 und 4 dargestellten Ausführungsformen, bei denen die Sitzflächenbegrenzungsnut 46 am Ventilstück 22 ausgebildet ist, kann diese auch am Ventilelement 12 nicht erfindungsgemäß ausgebildet sein. Gleiches gilt nicht erfindungsgemäß auch für die Ausbildung der Winkelabweichung 48 von der gedachten Fortsetzung 42 der Sitzlinie und für die Ausbildung der Verschleißschutzschicht 60, die in der in Figur 4 dargestellten Ausführungsform auf der Sitzfläche 30 am Ventilstück 22 ausgebildet ist und durch die Sitzflächenbegrenzungsnut 46 vom unbeschichteten Bereich 64 des Ventilstücks 22 getrennt ist.

Statt die Verschleißschutzschicht 60 lokal auf der Sitzfläche 30 aufzubringen, kann an der Sitzfläche 30 unter Zwischenschaltung der in den Ausführungsformen gemäß Figuren 3 und 4 dargestellten Sitzflächenbegrenzungsnut 46 auch nicht erfindungsgemäß ein unterschiedlicher Verschleißkoeffizientenverlauf innerhalb und außerhalb der Sitzflächenbegrenzungsnut 46 durch einen Härtegradienten bei der Fertigung des Ventilstücks 22 und/oder der Fertigung des an diesem aufgenommenen Ventilelementes 12 erzeugt werden.

Wie vorstehend bereits beschrieben, kann die in Figur 3 dargestellte Ausführungsform mit der Ausführungsform gemäß Figur 4, in der die Ausbildung auf der beispielsweise pyrolytisch aufgebrachten SiO₂-Schict dargestellt ist, kombiniert werden. Allen Ausführungsformen der Figuren 2 bis 4 gemeinsam, dass die den Sitzbegrenzungsbereich 44 begrenzende Sitzabsetzkante 40 durch die Ausbildung der Sitzflächenbegrenzungsnut 46 in fertigungstechnischer Hinsicht erheblich leichter hergestellt werden kann.

## Patentansprüche

1. Schaltventil (10) mit einem einen Ventilsitz (28) öffnenden oder verschließenden Ventilelement (12), welches mit einem Ventilstück (22) des Schaltventils (10) zusammenwirkt, das einen unter Systemdruck stehenden Hochdruckraum (26) druckentlastet oder druckbeaufschlagt, dem der Ventilsitz (28) zugeordnet ist, wobei am ventilsitz (28) zwischen Ventilelement (12) und dem Ventilstück (22) eine durch eine Sitzabsetzkante (40) begrenzt Sitzbegrenzungsfläche (44) verläuft, **dadurch gekennzeichnet, dass** die Sitzbegrenzungsfläche (44) am Ventilstück (22) ausgeführt ist und die Sitzabsetzkante (40) eine im Ventilstück (22) ausgebildete Sitzflächenbegrenzungsnut (46) begrenzt, wobei die Sitzflächenbegrenzungsnut (46) einen mit einer Verschleißschutzschicht (60) beschichteten Bereich der Sitzfläche (30) von einem unbeschichteten Bereich (64) trennt.

2. Schaltventil gemäß Anspruch 1, **dadurch gekennzeichnet, dass** die Sitzflächenbegrenzungsnut (46) eine Unterbrechung (56) einer Sitzfläche (30) und einer Kegelfläche (58) darstellt.

3. Schaltventil gemäß Anspruch 2, **dadurch gekennzeichnet, dass** die Kegelfläche (58) unter einer Winkclabweichung (48) in Bezug auf die gedachte Fortsetzung (42) der Sitzlinie verläuft.

4. Schaltventil gemäß Anspruch 1, **dadurch gekennzeichnet, dass** eine Begrenzungkante der Sitzflächenbegrenzungsnut (46) um einen Höhenversatz (50) in Bezug auf die gedachte Fortsetzung (42) der Sitzlinie des Ventilsitzes (28) verläuft.

5. Schaltventil gemäß Anspruch 1, **dadurch gekennzeichnet, dass** die Verschleißschutzschicht (60) aus pyrolysiertem SiO₂ gefertigt ist.

6. Schaltventil gemäß Anspruch 1, **dadurch gekennzeichnet, dass** die Sitzlinien innerhalb und außerhalb der Sitzflächenbegrenzungsnut (46) auf einer Geraden, bevorzugt der gedachten Fortsetzung (42) von Sitzlinien des Ventilsitzes (28) liegen.

## Claims

1. Switching valve (10) having a valve element (12) which opens or closes a valve seat (28) and which interacts with a valve piece (22) of the switching valve (10), which switching valve releases pressure from or pressurizes a high-pressure chamber (26) which is at system pressure and to which the valve seat (28) is assigned, wherein a seat boundary surface (44) which is bounded by a seat shoulder edge (40) runs on the valve seat (28) between valve element (12) and the valve piece (22), **characterized in that** the seat boundary surface (44) is formed on the valve piece (22) and the seat shoulder.edge (40) bounds a seat surface boundary groove (46) formed in the valve piece (22), wherein the seat surface boundary groove (46) separates a region, which is coated with an anti-wear coating (60), of the seat surface (30) from an uncoated region (64).

2. Switching valve according to Claim 1, **characterized in that** the seat surface boundary groove (46) constitutes a gap (56) between a seat surface (30) and a conical surface (58).

3. Switching valve according to Claim 2, **characterized in that** the conical surface (58) runs with an angular deviation (48) in relation to the imaginary projection (42) of the seat line.

4. Switching valve according to Claim 1, **characterized in that** a boundary edge of the seat surface boundary groove (46) runs with a height offset (50) in relation to the imaginary projection (42) of the seat line of the valve seat (28).

5. Switching valve according to Claim 1, **characterized in that** the anti-wear coating (60) is produced from pyrolyzed SiO₂.

6. Switching valve according to Claim 1, **characterized in that** the seat lines lie inside and outside the seat surface boundary groove (46) on a straight line, preferably on the imaginary projection (42) of seat lines of the valve seat (28).

## Revendications

1. Soupape de commande (10) comprenant un élément de soupape (12) ouvrant ou fermant un siège de soupape (28), qui coopère avec un organe de soupape (22) de la soupape de commande (10), qui détend en pression ou sollicite en pression un espace haute pression (26) soumis à la pression du système, auquel est associé le siège de soupape (28), une surface de limitation de siège (44) limitée par une arête d'épaulement de siège (40) s'étendant sur le siège de soupape (28) entre l'élément de soupape (12) et l'organe de soupape (22), **caractérisée en ce que** la surface de limitation de siège (44) est réalisée sur l'organe de soupape (22) et l'arête d'épaulement de siège (40) limite une rainure de limitation de surface de siège (46) réalisée dans l'organe de soupape (22), la rainure de limitation de surface de siège (46) séparant une région de la surface de siège (30) revêtue d'une couche de protection contre l'usure (60) d'une région non revêtue (64).

2. Soupape de commande selon la revendication 1, **caractérisée en ce que** la rainure de limitation de surface de siège (46) constitue une interruption (56) d'une surface de siège (30) et d'une surface conique (58).

3. Soupape de commande selon la revendication 2, **caractérisée en ce que** la surface conique (58) s'étend suivant un écart angulaire (48) par rapport au prolongement imaginaire (42) de la ligne de siège.

4. Soupape de commande selon la revendication 1, **caractérisée en ce que** l'arête de limitation de la rainure de limitation de surface de siège (46) s'étend avec un décalage en hauteur (50) par rapport au prolongement imaginaire (42) de la ligne de siège du siège de soupape (28).

5. Soupape de commande selon la revendication 1, **caractérisée en ce que** la couche de protection contre l'usure (60) est fabriquée en SiO₂ pyrolysé.

6. Soupape de commande selon la revendication 1, **caractérisée en ce que** les lignes de siège à l'intérieur et à l'extérieur de la rainure de limitation de surface de siège (46) se situent sur une droite, de préférence le prolongement imaginaire (42) des lignes de siège du siège de soupape (28).
